# EUROPEAN PATENT APPLICATION

(11) **EP 2 339 841 A1**
(43) Date of publication of application: **29.06.2011**
(21) Application number: 11156268.2
(22) Date of filing: 23.02.2006
(51) Int. Cl.: H04N 5/782

(54) **Recording and reproducing apparatus**

(30) Priority: 28.04.2005 JP 2005132123
(62) Divisional of application: 06714377.6
(71) Applicant: Sharp Kabushiki Kaisha, Osaka 545 (JP)
(72) Inventor: Ohno, Ryoji, Matsudo-shi Chiba 270-0023 (JP); Matsushita, Takeshi, Chiba-shi Chiba 266-0005 (JP); Maeda, Takahiro, Chiba-shi Chiba 266-0031 (JP); Yoshida, Masahiro, Chiba-shi Chiba 262-0032 (JP); Kihara, Shinjiro, Chiba-shi Chiba 266-0005 (JP); Ichikawa, Akio, Chiba-shi Chiba 266-0031 (JP)
(74) Representative: Treeby, Philip David William

(57) **Abstract**

A recording and reproducing apparatus for recording and reproducing the stream of a content, in which video image and audio streams are extracted from streams of a predetermined format, and a new stream, the edit of which can be freely carried out, is created from the streams and recorded. A recording and reproducing apparatus comprises an input/output interface for inputting a stream, a stream conversion processing portion for converting an input stream of a predetermined format into a stream comprising only a video image stream and an audio stream and a recording medium writing control portion for writing and recording the converted stream in a recording medium. The recording medium writing control portion writes managing information representing that the stream converted by the stream conversion processing portion is recorded in a predetermined area (manufacturer definition area) of the recording medium. The recording and reproducing apparatus can control various functions (display function, edit function, reproduction function, output function, dubbing function, and so forth) according to the managing information.

## Description

### TECHNICAL FIELD

The present invention relates to a recording and reproducing apparatus, and, more particularly, to a recording and reproducing apparatus that can record video image data and audio data externally input into a recording medium and that can read and output the video image data and the audio data from the recording medium.

### BACKGROUND OF THE INVENTION

Recently, with the progress of the digitalization of television broadcasting, the contents of programs are provided as HD (High Definition) video images having high image quality. Because of this tendency, a recorder to record contents of HD video images into a recording medium such as a hard disc or a BD (Blu-ray Disc) without applying any processing to the HD video images is manufactured as a commercial product. A high vision camera that can record HD video images onto a DV (Digital Video) tape is also manufactured as a commercial product. Therefore, an environment where HD video images can be handled at the level of an individual person is being prepared.

To record and reproduce contents using a removable recording medium such as the above BD or the above DV tape, standards to handle contents are provided for each type of recording medium. For example, the standard for the BD provides the standard to record contents of digital broadcasting and the standard to encode and record analog video images. For the DV tape, the HDV (High Definition Video) standard to record and reproduce contents of HD video images is provided.

As above, each removable recording medium is recorded with contents in the stream format conforming to each standard. These recorders are enabled to copy and move contents among the recorders by connecting each other using an IEEE1394 cable, etc., and copying and moving the contents among different types of recording medium are necessary.

On the other hand, when contents are recorded in a recording medium such as a BD, managing information to manage the contents is created and this managing information is recorded together with the contents. This managing information is recorded with information of the stream format information of the contents included therein, and the stream format of the contents may easily be determined from the stream format information. Therefore, display, reproduction, editing, etc., conforming to the stream format are enabled.

When digital broadcasting is recorded into these recording medium, it is common to excerpt only desired programs (channels) from the broadcasting stream and record the excerpted stream. For example, Patent Document 1 discloses a technique to excerpt and record one piece of data from a signal into which plural pieces of data are time-division-multiplexed. Patent Document 2 discloses a technique to facilitate extraction and acquisition of information necessary for recording and reproducing of programs.
Patent Document 1: Japanese Laid-Open Patent Publication No. 11-275519
Patent Document 2: Japanese Laid-Open Patent Publication No. 2001-218143

### DISCLOSURE OF THE INVENTION

### PROBLEMS TO BE SOLVED BY THE INVENTION

For example, when contents in a stream format that conforms to a specific standard such as the HDV standard are recorded into a recording medium, processes such as editing executed afterwards must be executed in a method that conforms to the standard. That is, a problem is arisen that processes of the stream can not be freely executed due to the limits imposed by the standard. The techniques disclosed in the above Patent Documents 1 and 2 execute extraction of a stream by each piece of data of a computer program or a broadcasted program and do not avoid limits imposed by a specific standard.

Depending on the standard of a recording medium, contents in a specific stream format may not be recorded without applying any process thereto. For example, when contents conforming to the HDV standard is tried to be recorded into a BD without applying any process to the contents, a problem is arisen that recording can not be executed because a specific field of the fields for the managing information of the BD is reserved.

When the recording medium to be recorded with the contents is a removable recording medium such as a BD, the recording method of the managing information of the contents is defined by the standard. Therefore, for recording of the stream format into the managing information, a specific code corresponding to the stream format is recorded in a specific area. In this recording, when contents of a stream format that is not provided in the standard are recorded, the stream format can not be recorded in the managing information because no specific code corresponding to the stream format is present. Therefore, a problem has arisen that display, reproduction, editing, etc., conforming to the stream format are difficult because the stream format of the recorded contents can not be easily determined.

The present invention was conceived considering the above practical circumstances and an object thereof is to enable a recording and reproducing apparatus that records and reproduces a stream of contents, to extract a video image stream and an audio stream from an input stream of a predetermined format, to create a new stream to which editing, etc., can be freely executed from these streams, and to record the new stream.

Another object of the present invention is to enable information to determine the stream format for which no recording method used on a recording medium is provided, to be recorded in a predetermined area on the recording medium.

### MEANS FOR SOLVING THE PROBLEMS

To solve the above problems, a first technical means of the present invention is a recording and reproducing apparatus that records and reproduces a stream of contents, comprising: a stream conversion processing means that converts an input stream of a predetermined format into a stream comprising only a video image stream and an audio stream; and a recording medium writing control means that records the converted stream by writing the converted stream into a recording medium.

A second technical means is the recording and reproducing apparatus as defined in the first technical means, wherein the recording medium writing control means writes into the recording medium managing information that indicates that the recording medium is recorded with the stream converted by the stream conversion processing means.

A third technical means is a recording and reproducing apparatus that records and reproduces a stream of contents, comprising: a recording medium writing control means that records an input stream by writing the input stream into a recording medium; and a determining means that determines whether the input stream recorded is a stream of a predetermined format, wherein when the determining means determines that the input stream is a stream of the predetermined format, the recording medium writing control means writes into the recording medium managing information that indicates that the recording medium writing control means has been recorded with the stream of the predetermined format.

A fourth technical means is the recording and reproducing apparatus as defined in any one of the first to third technical means, wherein the recording medium writing control means writes the managing information into a predetermined area of the recording medium.

A fifth technical means is a recording and reproducing apparatus that records and reproduces a stream of contents, comprising: a recording medium that records a stream and managing information on the stream; and a determining means that determines the type of a stream based on managing information recorded in the recording medium.

A sixth technical means is the recording and reproducing apparatus as defined in the fifth technical means, wherein the determining means determines whether the type of a stream recorded in the recording medium is a stream input in a predetermined format.

A seventh technical means is the recording and reproducing apparatus as defined in the fifth or sixth technical means, wherein the determining means determines whether the type of a stream recorded in the recording medium is a stream that has been converted from an input stream into a stream consisting only of a video image stream and an audio stream, or a stream that has not been converted from the input stream.

An eighth technical means is the recording and reproducing apparatus as defined in any one of the fifth to seventh technical means, wherein the managing information is recorded in a predetermined area of the recording medium.

A ninth technical means is the recording and reproducing apparatus as defined in any one of the fifth to eighth technical means, further comprising a function control means that controls any one or more function (s) of a displaying function of displaying information on a stream, an editing function of editing a stream, a reproducing function of reproducing a stream, an output function of externally outputting a stream, and a dubbing function of dubbing a stream, based on the result of the judgment by the determining means.

A tenth technical means is the recording and reproducing apparatus as defined in the ninth technical means, wherein when the determining means determines that the stream is a stream input in the predetermined format, the function control means controls the displaying function to display the information indicating the judgment result on a screen.

An eleventh technical means is the recording and reproducing apparatus as defined in the ninth technical means, wherein when the determining means determines that the stream is a stream input in the predetermined format and has not been converted since the input thereof, the function control means controls the displaying function to display on the screen a time code included in the stream.

A twelfth technical means is the recording and reproducing apparatus as defined in the ninth technical means, wherein when the determining means determines that the stream is a stream input in the predetermined format and has not been converted since the input thereof, the function control means controls the displaying function to display information on the date and the time of day on/at which the stream was recorded included in the stream.

A thirteenth technical means is the recording and reproducing apparatus as defined in the ninth technical means, wherein when the determining means determines that the stream is a stream input in the predetermined format and has not been converted since the input thereof, the function control means controls the editing function to prohibit any editing to the stream.

A fourteenth technical means is the recording and reproducing apparatus as defined in the ninth technical means, wherein the stream has a supporting stream that retains attribute data of the stream, and wherein when the determining means determines that the stream is a stream input in the predetermined format and has not been converted since the input thereof, the function control means controls the editing function to edit the stream correcting the supporting stream such that the supporting stream matches the predetermined format.

A fifteenth technical means is the recording and reproducing apparatus as defined in the ninth technical means, wherein when the determining means determines that the stream is a stream input in the predetermined format and has not been converted since the input thereof, the function control means controls the reproducing function to reproduce the stream based on reproduction position information of the time code included in the stream.

A sixteenth technical means is the recording and reproducing apparatus as defined in the ninth technical means, wherein when the determining means determines that the stream is a stream input in the predetermined format, the function control means controls the output function to prohibit the stream to be externally output.

A seventeenth technical means is the recording and reproducing apparatus as defined in the ninth technical means, wherein the function control means can determine whether an apparatus that is a destination of output of the stream supports a stream of the predetermined format and, when the determining means determines that the stream is a stream input in the predetermined format and has not been converted since the input thereof, the function control means controls the output function to prohibit the stream to be output to an apparatus other than an apparatus that supports a stream of the predetermined stream.

An eighteenth technical means is the recording and reproducing apparatus as defined in the ninth technical means, wherein the stream has a supporting stream that retains attribute data of the stream, and wherein when the determining means determines that the stream is a stream input in the predetermined format, the function control means controls the outputting function to correct or create the supporting stream and, thereby, convert and output the stream such that the stream matches the predetermined format.

A nineteenth technical means is the recording and reproducing apparatus as defined in the ninth technical means, wherein the determining means can determine whether the stream is a combined stream formed by combining plural types of stream, and wherein when the determining means determines that the stream is a combined stream, the function control means controls the dubbing function to prohibit dubbing of the stream.

### EFFECT OF THE INVENTION

According to the invention, the recording and reproducing apparatus that records and reproduces a stream of contents can extract a video image stream and an audio stream from an input stream of a predetermined format, create a new stream to which editing, etc., can be freely executed from these streams, and record the new stream. Therefore, display, reproduction, editing, etc., can be freely executed to streams of various formats.

Information to determine the stream format for which no recording method used on a recording medium is provided, can be recorded in a predetermined area on the recording medium. Therefore, streams of various formats can be recorded regardless of the provision of the recording method used on the recording medium.

When the input stream is recorded into the recording medium, the format is converted into a general MPEG stream (for example, MPEG2-TS) by discarding information other than the video image stream and the audio stream. Therefore, the stream can be freely handled regardless of the format of the input stream.

### BRIEF DESCRIPTION OF THE DRAWINGS

[Fig. 1] Fig. 1 is a block diagram of an exemplary configuration of a recording and reproducing apparatus according to a first embodiment of the present invention.
[Fig. 2] Fig. 2 is a flowchart for explaining an exemplary operation of a stream information analyzing portion.
[Fig. 3] Fig. 3 is a diagram of an example of a syntax of managing information to be written in a manufacturer defined area.
[Fig. 4] Fig. 4 is a block diagram of an exemplary configuration of a recording and reproducing apparatus according to a second embodiment of the present invention.
[Fig. 5] Fig. 5 is a flowchart for explaining an example of the flow of a process of determining the stream type of PlayList.
[Fig. 6] Fig. 6 is a flowchart for explaining an example of the flow of a process of determining the stream type of PlayItem.

### EXPLANATIONS OF REFERENCE NUMERALS

10, 20 recording and reproducing apparatus; 11, 26 input/output interface; 12 stream information extracting portion; 13 stream information analyzing portion; 14 stream conversion control portion; 15, 24 stream conversion processing portion; 16 managing information creating portion; 17, 27 recording medium writing control portion; 18 recording medium; 21 recording medium reading control portion; 22 managing information analyzing portion; 23 function control portion; 25 video image output processing portion; and 30 monitor.

### PREFERRED EMBODIMENTS OF THE INVENTION

Description will be given for embodiments of the present invention referring to the drawings. In the description below, same reference numerals are given to parts that have the same function and repeated description therefor is omitted.

### <First Embodiment>

A first embodiment of the present invention records an input stream together with managing information, converting the input stream according to the type of the input stream.

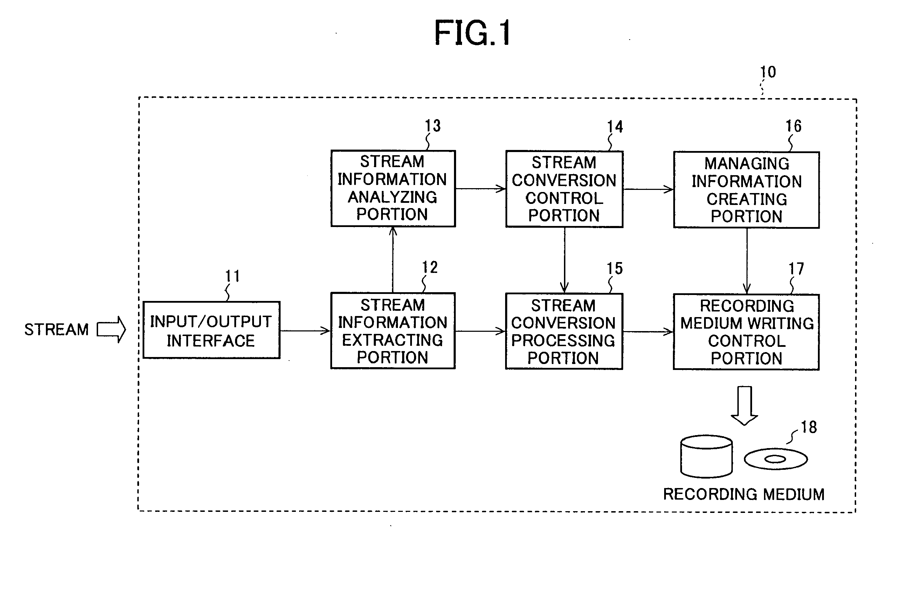

Fig. 1 is a block diagram of an exemplary configuration of a recording and reproducing apparatus according to the first embodiment of the present invention. The recording and reproducing apparatus 10 is configured including an input/output interface 11, a stream information extracting portion 12, a stream information analyzing portion 13, a stream conversion control portion 14, a stream conversion processing portion 15, a managing information creating portion 16, and a recording medium writing control portion 17.

The input/output interface 11 accepts input such as a stream to be recorded (for example, MPEG2-TS) from the exterior of the recording and reproducing apparatus 10. In the embodiment, an interface of IEEE1394 is used. However, another interface can be used. For example, an aspect that the stream is input using a TCP/IP interface may be employed. An aspect that includes a digital broadcasting tuner and that inputs the stream from the tuner.

The stream input from the input/output interface 11 is fed to the stream information extracting portion 12. In the portion 12, information indicating the feature of the stream is extracted from the input stream. Specifically, the information indicating the feature of the stream is, for example, section information of the MPEG2-TS included in the stream, or video image aspect information and sound-multiplex information included in each ES (Elementary Stream).

The information extracted by the stream information extracting portion 12 is fed to the stream information analyzing portion 13. The stream information analyzing portion 13 analyzes the extracted information and, based on the analysis result, controls the stream conversion control portion 14 and the managing information creating portion 16 that are in the latter stage. This stream information analyzing portion 13 corresponds to a determining means of the present invention.

The stream conversion control portion 14 controls the stream conversion processing portion 15 based on instructions from the stream information analyzing portion 13. According to the control of the stream conversion control portion 14, the stream conversion processing portion 15 executes a converting process of the input stream and delivers the converted stream to the recording medium writing control portion 17. The contents of the converting process are, for example, excluding streams other than the video image stream and the audio stream from the input stream or rewriting of the section information of the input stream. This control enables the input stream to be delivered to the recording medium writing control portion 17 as it is without converting the input stream.

Based on the instructions from the stream information analyzing portion 13, the managing information creating portion 16 creates managing information to be written into a recording medium 18 and delivers the created managing information to the recording medium writing control portion 17.

The recording medium writing control portion 17 writes the stream delivered from the stream conversion processing portion 15 and the managing information delivered from the managing information creating portion 16, into the recording medium 18. In the embodiment, description will be given taking an example of recording into a BD (Blu-ray Disc).

Simplified description will be given for an HDV stream. The HDV standard is a standard to record a high-vision video image onto a DV tape, and two types thereof that are HD1 (720p) and HD2 (1080p) are present. The description will be given taking a typical example of a stream of the HD2 type. Hereinafter, when simply "HDV" is referred to as, an HDV stream of the HD2 type is referred to. For the HDV standard, the standard for recording on the DV tape and the format of MPEG2-TS (Transport Packet) constituted when transmission is executed by a network of IEEE1394 type are defined and the embodiment deals with a stream of MPEG2-TS format. An HDV stream consists of a video image stream, an audio stream, a stream recorded with a video image supporting data (Aux-V), and a stream recorded with an audio supporting data (Aux-A). The video image and the audio can be reproduced without the above two supporting streams of the above streams. The above supporting data refer to, for example, attribute data such as a time record and a recorded time of day that will be described later.

A Registration Descriptor enables determining that the input stream is an HDV stream. The Registration Descriptor is a descriptor used for identifying the type of a stream. For an HDV stream, the standard provides that the section information includes a Registration Descriptor including specific parameters.

Detailed description will be given for an exemplary operation of the main components constituting the recording and reproducing apparatus 10, and the description will be given assuming that the accepted stream is either an HDV stream or a partial TS conforming to ARIB (Association of Radio Industries and Businesses). The description will be given taking an example of the case where conversion into a stream that only includes a video image stream and an audio stream is executed and the converted stream is recorded when the stream is accepted as an HDV stream input. Hereinafter, a scheme according to which an input stream is converted into a stream only having a video image stream and an audio stream and the converted stream is recorded, is referred to as "AVOnly mode", and a scheme according to which an input stream is recorded as it is, is referred to as "Transparent mode".

The stream information analyzing portion 13 receives from the stream information extracting portion 12 the section information included in the accepted stream, and analyzes the section information.

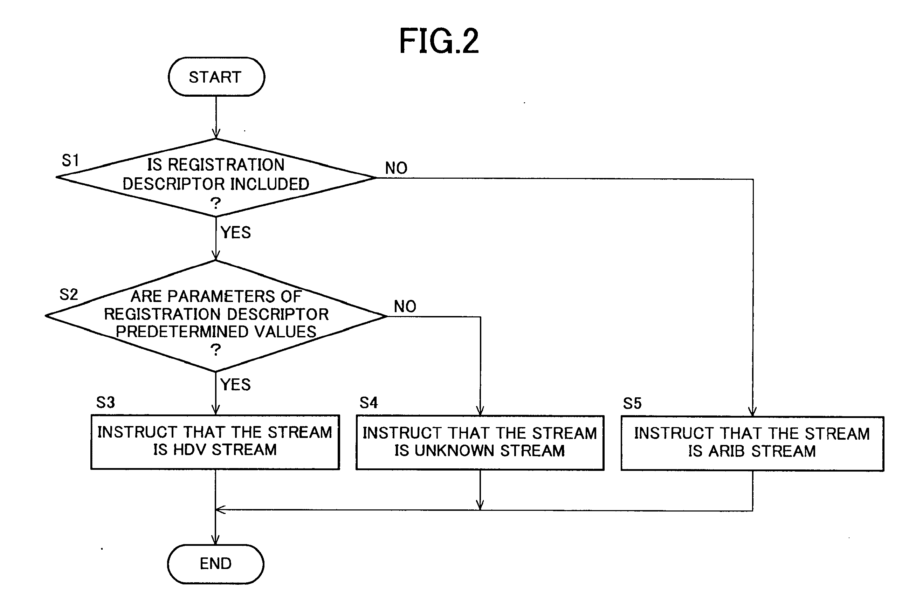

Fig. 2 is a flowchart for explaining the exemplary operation of the stream information analyzing portion 13. The stream information analyzing portion 13 determines whether the extracted section information includes a Registration Descriptor (step S1). When the Registration Descriptor is included (the case of YES), the operation advances to step S2. When the Registration Descriptor is not included (the case of NO), the operation advances to step S5.

When it is determined that the Registration Descriptor is included at the above step S1 (the case of YES), the stream information analyzing portion 13 checks parameters of the Registration Descriptor (step S2). When the values of the parameters checked at step S2 coincide with values specified in the HDV standard (the case of YES), the operation advances to step S3. When the values of the parameters do not coincide (the case of NO), the operation advances to step S4.

The stream information analyzing portion 13 notifies the stream conversion control portion 14 and the managing information creating portion 16 in the latter stage of the judgment result at steps S3 to S5. At the above step S2, when the values of the parameters checked coincide with the values specified in the HDV standard (the case of YES), the result of this judgment is that the accepted stream is an HDV stream and this is notified of (step S3). At the above step S2, when the parameters checked do not coincide with the values specified in the HDV standard (the case of NO), the judgment result is that the accepted stream is not a stream conforming to either the HDV standard or the ARIB standard and is an unknown stream, and this result is notified (step S4).

When the stream information analyzing portion 13 determines at the above step S1 that the Registration Descriptor is not included (the case of NO), the judgment result is that the stream is a stream conforming to the ARIB standard and the stream information analyzing portion 13 notifies of this result (step S5). In this manner, the stream information analyzing portion 13 notifies the stream conversion control portion 14 and the managing information creating portion 16 of the judgment result. At this step, the extracted section information is transmitted together with the judgment result. At step S4, the portion 13 may notify the recording control portion not shown of the judgment result to prohibit recording of the stream that has been determined to be unknown.

The stream conversion control portion 14 controls the stream conversion control portion 15 based on the judgment result notified of from the stream information analyzing portion 13. The contents of a control instruction issued to the stream conversion processing portion 15 are either of "conversion into a stream only having a video image stream and an audio stream" (AVOnly mode: the case where the judgment result notified of is an HDV stream) or "the input stream as it is" (Transparent mode).

When the stream conversion control portion 14 instructs the stream conversion processing portion 15 to convert into the AVOnly mode, the stream conversion control portion 15 executes a stream converting process. This stream converting process is executed in, for example, the following method.

In the stream conversion in the AVOnly mode, a packet that has a PID (Packet IDentifier) corresponding to a supporting stream is deleted by packet-filtering. Packets having other PIDs are not filtered. Due to this filtering process, supporting streams are eliminated and only a video image stream and an audio stream are left.

Because the configuration of the stream has been changed, the section information of a PMT (Program Map Table) packet also needs to be rewritten. The section information of the PMT packet includes information indicating which packet the stream includes, and the section information included in the PMT packet of the input stream includes data corresponding to the eliminated supporting streams. Therefore, this data needs to be deleted.

The stream does not conform to the HDV stream standard due to the conversion into the AVOnly mode. Therefore, the Registration Descriptor needs to be deleted. Section information obtained by deleting the data corresponding to these supporting streams and the Registration Descriptor from the section information is created and replacement of the section information with the new section information is executed.

The managing information creating portion 16 creates managing information to be recorded in the recording medium. The managing information to be created differs depending on the judgment result notified of from the stream information analyzing portion 13. When the notified judgment result is that the stream is an ARIB stream, managing information as defined in the BD standard is created.

On the other hand, when the notified judgment result is that the streams is an HDV stream, the managing information creating portion 16 records that the input stream is an HDV stream, using a predetermined area of the recording medium 18 (for example, an area for which the manufacturer can freely set a value (hereinafter, "manufacturer defined area")). Two reasons are present for this. One is that the BD standard does not have any provision about managing information in the case where a stream is an HDV stream, and the other one is that a stream recorded in the AVOnly mode is not an HDV stream in the strict sense. The manufacturer defined area is an open area according to the standard such that the recording and reproducing apparatus 10 may proprietarily use. When an HDV stream is recorded in the AVOnly mode, an invalid value is inserted in the managing information defined in the above BD standard and stream type information is recorded in the manufacturer defined area.

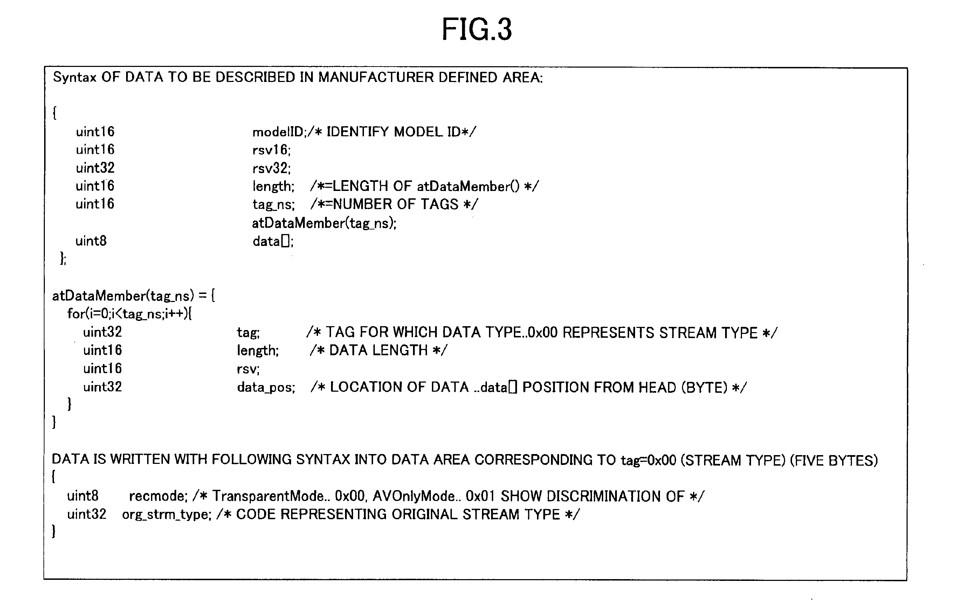

Fig. 3 is a diagram of an example of a syntax of managing information to be written in a manufacturer defined area. According to this syntax, plural types of managing information can be written and, in Fig. 3, an access is enabled to an entity of the managing information that describes the type of the stream using "tag" (a field to identify the type of managing information) and "data_pos" (the position at which the managing information is described) under "atDataMember()". The entity of the managing information consists of the fields of "recmode" and "org_strm_type" as described in the lowest portion in Fig. 3. "recmode" indicates whether a stream is recorded in the AVOnly mode or the Transparent mode. "org_strm_type" stores a code that indicates the type of the original input stream. For example, when "recmode=AVOnly" and "org_strm_type=HDV" are described, this indicates that the stream is a stream recorded in the AVOnly mode, that is, the stream is converted into a stream that only has the video image and the audio thereof, and is recorded.

The above syntax in the manufacturer defined area is only an example in every respect and is not limited to this form. When the recording medium is not a BD, a manufacturer defined area defined for the recording medium maybe used.

The recording medium writing control portion 17 writes the stream fed from the stream conversion processing portion 15 and the managing information fed from the managing information creating portion 16, into the recording medium 18.

In this manner, the conversion process corresponding to the type of the input stream is executed and the stream is recorded into the recording medium 18. Concurrently, the information on the stream is recorded as the managing information.

The embodiment of the present invention is not always limited to the above input streams, the above recording formats, the above recording mediums. Though the description has been given for the case where the original input stream is a broadcasting stream or an HDV stream in the embodiment, the embodiment is not limited to this. For example, the embodiment may support the SESF (Self-Encoded Stream Format) format or MTRM (MPEC Transport stream for Recording Media) format. A method of recording an HDV stream not in the AVOnly mode but in the Transparent mode can be selected.

The recording medium 18 may not be a BD but may be an internal HDD, and an iVDR (Information Versatile Disc for Removable usage) that is a removable hard disc drive may be used.

According to the embodiment, in a recording and reproducing apparatus that records and reproduces a stream of contents, a video image stream and an audio stream can be extracted from an input stream of a predetermined type and a new stream to which editing, etc., can be freely executed can be created from these streams and can be recorded. Therefore, display, reproduction, editing, etc., can be freely executed to various types of stream.

Information to determine the stream format for which no recording method on a recording medium is defined can be recorded in a predetermined area on the recording medium. Therefore, various types of stream can be recorded regardless of the definition of the recording method on the recording medium.

When an input stream is recorded into a recording medium, the format of the input stream is converted into a common MPEG stream (for example, MPEG2-TS) format by discarding information other than the video image stream and the audio stream. Therefore, the input stream can be freely handled regardless of the format of the input stream.

### <Second Embodiment>

A second embodiment of the present invention determines the type of an input stream based on data recorded in managing information and executes an operation based on a judgment result.

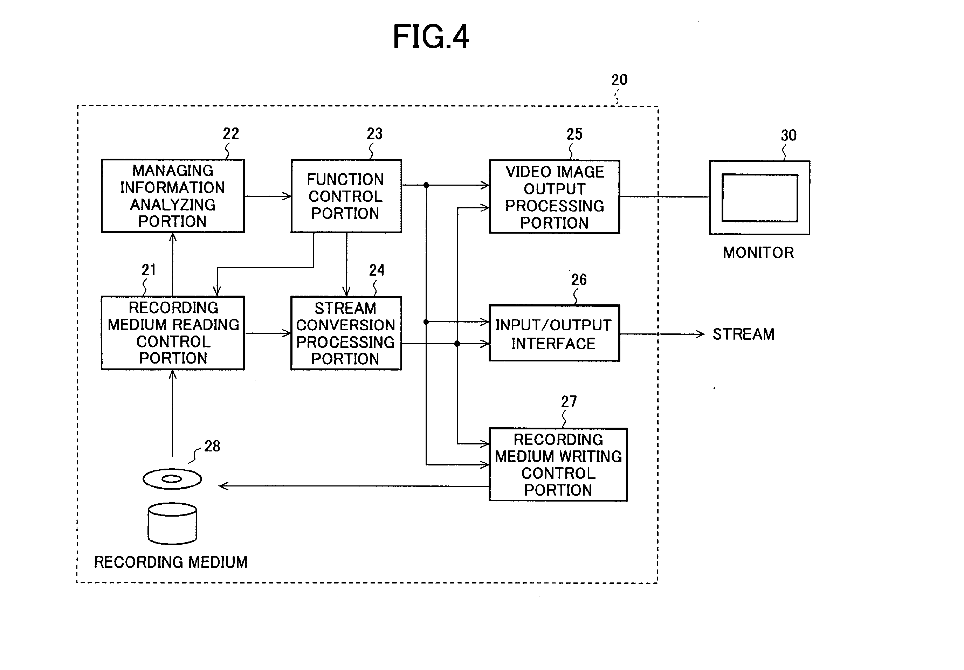

Fig. 4 is a block diagram of an exemplary configuration of a recording and reproducing apparatus according to the second embodiment of the present invention. The recording and reproducing apparatus 20 is configured including a recording medium reading control portion 21, a managing information analyzing portion 22, a function control portion 23, a stream conversion processing portion 24, a video image output processing portion 25, an input/output interface 26, and a recording medium writing control portion 27.

Description will be given for an exemplary overall operation of the recording and reproducing apparatus 20 referring to Fig. 4. The recording medium reading control portion 21 reads a stream and the managing information thereof from a recoding medium 28. The read managing information is delivered to the managing information analyzing portion 22. Analysis of the managing information is executed and the type of the stream recorded is determined. This managing information analyzing portion 22 corresponds to a determining means of the present invention. The function control portion 23 controls various functions that the recording and reproducing apparatus 20 has, based on the result of the judgment by the managing information analyzing portion 22. In Fig. 4, The function control portion 23 controls the stream conversion processing portion 24, the video image output processing portion 25, the input/output interface 26, and the recording medium writing control portion 27.

The stream conversion processing portion 24 executes a stream converting process based on an instruction from the function control portion 23. The video image output processing portion 25 converts the stream into a video image signal, outputs the signal to an external monitor 30, and executes overlaying of the managing information to be shown to a user. The input/output interface 26 outputs an MPEG2-TS to the exterior of the recording and reproducing apparatus 20 based on an instruction from the function control portion 23. Though an interface of IEEE1394 is used in the embodiment, another interface may be used. For example, an aspect that outputs a stream using a TCP/IP interface may be employed. The recording medium writing control portion 27 controls recording of the stream and the managing information into the recording medium 28 based on an instruction from the function control portion 23.

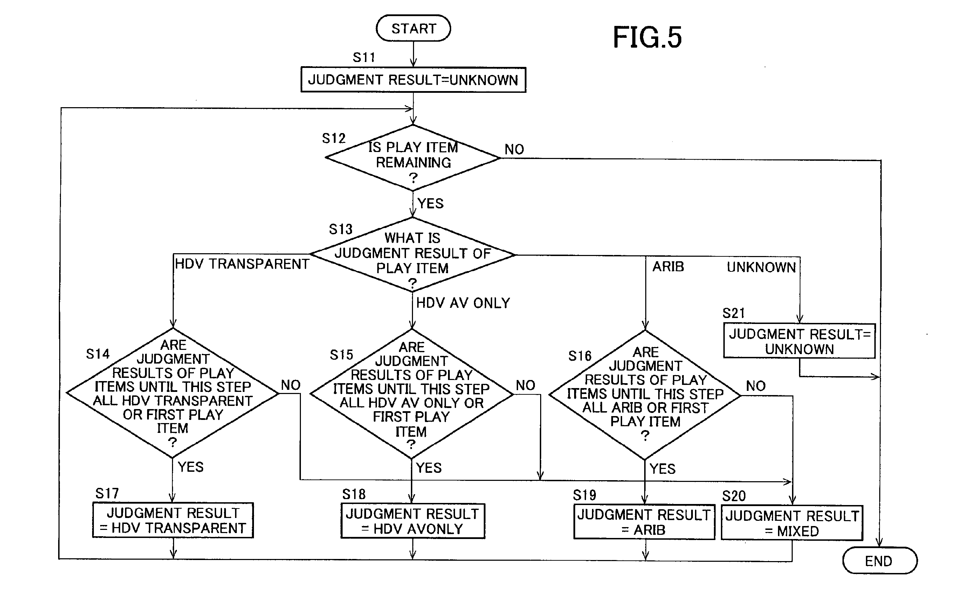

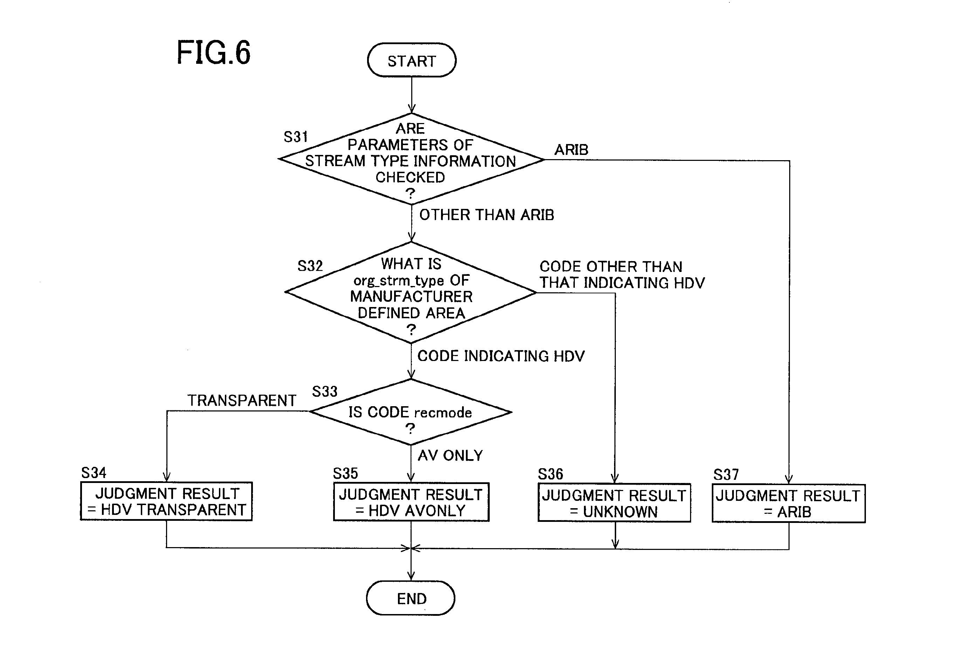

Detailed description will be given for an exemplary operation of the main components constituting the recording and reproducing apparatus 20. Figs. 5 and 6 are flowcharts for explaining the exemplary operation of the managing information analyzing portion 22. Fig. 5 is a flowchart for explaining an example of the flow of a process of determining the stream type of PlayList. Fig. 6 is a flowchart for explaining an example of the flow of a process of determining the stream type of PlayItem. "PlayList" in a BD refers to a stream train constituted of a plurality of PlayItems. Because each of the PlayItems has a stream type, the stream type needs to be totally determined using the judgment result for each constituent PlayItem in determining the stream type of the PlayList.

In Fig. 5, the managing information analyzing portion 22 first initializes a storing area in the managing information to store the judgment result (judgment result=unknown) (step S11), and determines whether any PlayItem remains in the PlayList (step S12). When judgments for all the PlayItems have been completed, that is a judgment condition to get out of a loop (the case of NO), the determining process is ended. On the other hand, when any PlayItem that have not been determined remains (the case of YES), judgment of stream type is executed for each PlayItem (step S13). In response to the judgment result, the operation advances to any of steps S14 to S16. At steps S14 to S16, a comprehensive judgment result is created referring to the judgment results obtained by determining the PlayItems before these steps.

When all the PlayItems determined are of the same type at steps S14 to S16, the operation advances to steps S17 to S19. On the other hand, when different types of PlayItems are mixed, the operation advances to step S20 at which the Play List creates a judgment result that different types of stream are mixed. When the judgment of the PlayItem results in "unknown" (the case of NO) at step S13, the judgment result of the entire PlayList is "unknown" as an unexpected result (step S21). The operation is ended without no further processing. Detailed description will be given for each step after step S13.

When the stream type of the PlayItem is determined to be "HDV Transparent" at the above step S13 (the case of HDV Transparent in Fig. 5), the managing information analyzing portion 22 determines whether the judgment results of the PlayItems before this step are all the same HDV Transparent or the first PlayItem (step S14). In the case of YES, the stream type of the PlayList is determined to be HDV Transparent (step S17). When different types of PlayItems are mixed at the above step S14 (the case of NO), a judgment result that different types of stream are mixed in the PlayList is created (step S20).

When the stream type of the PlayItem is determined to be "HDV AVOnly" at the above step S13 (the case of HDV AVOnly in Fig. 5), the managing information analyzing portion 22 determines whether the judgment results of the PlayItems before this step are all the same HDV AVOnly or the first PlayItem (step S15). When the result is YES, the stream type of the PlayList is determined to be HDV AVOnly (step S18). When different types of PlayItems are mixed at the above step S15 (the case of NO), a judgment result that different types of stream are mixed in the PlayList is created (step S20).

When the stream type of the PlayItem is determined to be "ARIB" at the above step S13 (the case of ARIB in Fig. 5), the managing information analyzing portion 22 determines whether the judgment results of the PlayItems before this step are all the same ARIB or the first PlayItem (step S16). When the result is YES, the stream type of the PlayList is determined to be ARIB (step S19). When different types of PlayItems are mixed at the above step S16 (the case of NO), a judgment result that different types of stream are mixed in the PlayList is created (step S20).

In the judgment result of each PlayItem in Fig. 5, the managing information (including the stream type information) recorded in the manufacturer defined area described in the above first embodiment is used. Description will be given for the managing information referring to Fig. 6.

In Fig. 6, the managing information analyzing portion 22 first reads data concerning the stream type (stream type information) from the managing information in an area specified in the standard corresponding to the PlayItem to be determined and checks the parameters (step S31). When the parameters correspond to those in the stream conforming to the ARIB standard as a result of the parameter check (the case of ARIB in Fig. 6), the PlayItem is determined to be ARIB (step S37). When the parameters are not those corresponding to those conforming to the ARIB (the case of those other than those of ARIB in Fig. 6), the managing information analyzing portion 22 reads data from the managing information in the manufacturer defined area and checks the value of org_strm_type (step S32). When this value is a code that indicates an HDV stream (the case of a code indicating the HDV in Fig. 6), the original stream is determined to be an HDV stream and the operation advances to step S33. When the above value is not a code that indicates an HDV stream (the case of a code other than that indicating the HDV in Fig. 6) or no manufacturer defined area is present at the above S32, this result is not expected and the stream type is determined to be "unknown" (step S36).

When the value of org_strm_type is a code that indicates an HDV stream at the above step S32 (the case of a code indicating an HDV in Fig. 6), the value of recmode is checked (step S33). When the result of the check is HDV Transparent (the case of Transparent in Fig. 6), the stream type is determined to be the HDV Transparent (step S34). On the other hand, when the result of the check shows the HDV AVOnly (the case of AVOnly in Fig. 6) at the above step S33, the stream type is determined to be the HDV AVOnly (step S35).

In the second embodiment of the present invention, the syntax in the manufacturer defined area is only an example in every respect and is not limited to this form. The syntax used for recording only has to coincide with the syntax used for determining. Though the description has been given above assuming that the original input stream is a stream conforming to the ARIB standard or an HDV stream, the embodiment can support any other stream other than the above two types of streams. In that case, a judgment corresponding to each stream is executed in the judgment process at each of steps S31 and S32 shown in Fig. 6.

The result determined by the managing information analyzing portion 22 is delivered to the function control portion 23. The function control portion 23 controls the stream conversion processing portion 24 to convert a stream stored in the recording medium 28 for outputting, and controls an output portion in the final stage (the video image output processing portion 25, the input/output interface 26, and the recording medium writing control portion 27) to realize the functions of displaying, reproducing, outputting, editing, dubbing, etc.

The stream conversion processing portion 24 outputs using the input/output interface 26 and converts the format of the stream into a format suitable for recording into another recording medium. Description will be given below for two types of converting processes.

A first one is correction of a supporting stream. For example, when a stream in the HDV Transparent mode has been commonly scene-deleted by deleting for each GOP in TS-editing, a supporting stream may have inconsistency in the vicinity of an editing point. Because a breach of the standard may be caused when this stream is output as it is, data written in the supporting stream in the vicinity of the editing point is corrected.

A second one is creation of a supporting stream. For example, the stream in the HDV AVOnly mode is converted into only the video image stream and the audio stream thereof by deleting the supporting stream from the original stream, and this can not be said to be an HDV stream. By multiplexing again while a supporting stream is being created, re-conversion is executed to the HDV stream. In this case, though attribute data (for example, the time code and the time of day at which the video image was recorded) recorded in the supporting stream of the original HDV stream is lost, the converted stream can be output to the exterior as a stream conforming to the HDV standard. In addition to the above two types of conversion, no conversion of the stream may be selected.

Description will be given for the control of the display function according to the embodiment of the present invention. The video image output processing portion 25 creates a video image and information to be displayed on the external monitor 30 based on the control of the function control portion 23. For example, this type of recording and reproducing apparatus includes the displaying function of listing contents recorded in a recording medium as a common function and, for the contents that the managing information analyzing portion 22 has determined that the stream thereof is an HDV stream, an icon that represents that the contents are the HDV stream, etc., are displayed.

According to another example of the control of the displaying function according to the embodiment of the present invention, the time code and the information on the time at which the video image was recorded written on the HDV supporting stream may be displayed. The "time code" refers to a counter value described on the supporting stream of the HDV stream. The "information on the time at which the video image was recorded" refers to information on the data and the time of day at which an HDV stream was recorded, that is retained in the supporting stream of the HDV stream. When the managing information analyzing portion 22 has determined that a stream is in the HDV Transparent mode, the time code (counter value) described in the supporting stream is displayed on a screen during the reproduction of the contents. Otherwise, the information on the time of day at which the video image was recorded, that is described in the supporting stream is displayed during the reproduction of the contents or the displaying of the above contents list.

Description will be given for the control of the reproducing function according to the embodiment of the present invention. When the managing information analyzing portion 22 determines that the stream is in the HDV Transparent mode, the function control portion 23 controls the recording medium reading control portion 21 and the video image output processing portion 25. For example, when a user interface not shown issues a reproducing position instruction using the time code, the reproduction of the stream is started by jumping to the reproducing position of the designated time code.

Description will be given for the control of the output function according to the embodiment of the present invention. The input/output interface 26 sends the stream to the exterior of the recording and reproducing apparatus 20 based on the control of the function control portion 23. For example, when the managing information analyzing portion 22 has determined that a stream is an HDV, the function control portion 23 prohibits the input/output interface 26 from sending streams.

According to another example of the control of the output function according to the embodiment of the present invention, the apparatus may include a determining function to determine whether a counterpart apparatus to which the input/output interface 26 sends a stream is an apparatus that supports the HDV. In this example, when the managing information analyzing portion 22 determines that the stream is in the HDV Transparent mode, the function control portion 23 controls to prohibit the input/output interface 26 from sending the stream to any apparatus other than the HDV-supporting apparatuses. The input/output interface 26 sends a stream only when the counterpart apparatus is an HDV-supporting apparatus, and does not send any stream when the counterpart apparatus is not an HDV-supporting apparatus.

According to another example of the control of the output function according to the embodiment of the present invention, when the managing information analyzing portion 22 determines that the stream is in the HDV AVOnly mode, the function control portion 23, in addition to the control of the input/output interface 26, controls the above stream conversion processing portion 24 to correct or create the supporting stream, again converts the stream into a stream of the HDV standard, and, thereafter outputs the converted stream to an external apparatus.

Description will be given for the control of the editing function according to the embodiment of the present invention. A typical editing function of a common MPEG2-TS stream in this type of recording and reproducing apparatus 20 can be scene-deleting function by deleting a stream for each GOP. In the embodiment of the present invention, the deletion of a stream for each GOP is realized by controlling the recording medium writing control portion 27.

In this operation, for example, when the managing information analyzing portion 22 determines that the stream is in the HDV Transparent mode, the function control portion 23 issues an instruction to prohibit editing to the recording medium writing control portion 27. Thereby, creation of any edited stream that breaches the HDV standard can be prevented.

According to another example of the control of the editing function, when the managing information analyzing portion 22 determines that the stream is in the HDV Transparent mode, the function control portion 23 instructs the stream conversion processing portion 24 to correct the supporting stream and, thereby, convert the stream into an edited stream conforming to the HDV standard. The recording medium writing control portion 27 instructs deletion of the stream for each GOP. Thereby, an edited stream that does not breach the HDV standard can be created.

Description will be given for the control of the dubbing function according to the embodiment of the present invention. The dubbing function is realized by reading of the stream by the recording medium reading control portion 21 and writing the stream into another recording medium by the recording medium writing control portion 27 through the stream conversion processing portion 24. Especially, according to a dubbing approach referred to as "high-speed dubbing", a stream read by the stream conversion processing portion 24 is written into another recording medium by the recording medium writing control portion 27 without re-encoding the stream.

In the above cases, the read stream may not be able to be recorded as it is depending on the type of the stream because the format for recording the stream may differ depending on the recording medium, and this is controlled by the function control portion 23. For example, when the managing information analyzing portion 22 determines that the contents to be dubbed are a mixed stream (that is, a combined stream formed by combining plural types of stream), the function control portion 23 issues an instruction to the recording medium writing control portion 27 to prohibit there from writing.

The embodiment of the present invention is not necessarily limited to the above input stream, the above recording method, and the above recording medium. For example, the stream to be recorded is not limited to the HDV stream and may be a stream conforming to another specific standard such as the MPEG2-TS. The recording medium may not be a BD but may be an internal HDD, and an iVDR that is a removable hard disc drive, etc., may be used. Though the description has been given herein for the case where the original input steam is a broadcasting stream or an HDV stream, the input stream is not limited to these. The embodiment can support, for example, the SESF format, the MTRM format, etc.

According to the embodiment, by recording the information on which type of stream the original stream recorded on the recording medium is, control of the functions such as the displaying function, the output function, the reproducing function, the editing function, and the dubbing function corresponding to the stream type can be properly executed.

## Claims

1. A recording and reproducing apparatus that records and reproduces a stream of contents, comprising:
a recording medium writing control portion that records an input stream by writing the input stream into a recording medium; and
a determining portion that determines whether the input stream is an HDV stream including a video image stream, an audio stream, a video image supporting data, an audio supporting data, and section information, wherein
when the determining portion determines that the input stream is an HDV stream, the recording medium writing control portion writes into the recording medium managing information that indicates that the HDV stream is recorded.

2. The recording and reproducing apparatus as defined in claim 1, wherein
the recording medium writing control portion writes the managing information into a predetermined area of the recording medium.

3. A recording and reproducing apparatus that records and reproduces a stream of contents, comprising:
a recording medium that records a stream and managing information on the stream; and
a determining portion that determines the type of a stream based on managing information recorded in the recording medium, wherein
the determining portion determines whether the type of a stream recorded in the recording medium is an HDV stream including a video image stream, an audio stream, a video image supporting data, an audio supporting data, and section information, or a stream which is not up to an HDV standard that the video image supporting data and the audio supporting data are eliminated from the HDV stream, and further, the section information is replaced with new section information in which an identifier indicative of being the HDV stream as well as data corresponding to the video image supporting data and the audio supporting data are eliminated from the section information.

4. The recording and reproducing apparatus as defined in claim 3, wherein
the managing information is recorded in a predetermined area of the recording medium.

5. The recording and reproducing apparatus as defined in claim 3 or claim 4, further comprising:
a function control portion that controls any one or more function(s) of a displaying function of displaying information on a stream, an editing function of editing a stream, a reproducing function of reproducing a stream, an output function of externally outputting a stream, and a dubbing function of dubbing a stream, based on the result of the judgment by the determining portion.

6. The recording and reproducing apparatus as defined in claim 5, wherein
when the determining portion determines that the stream is a stream input in an HDV format, the function control portion controls the displaying function to display the information indicating the judgment result on a screen.

7. The recording and reproducing apparatus as defined in claim 5, wherein
when the determining portion determines that the stream is a stream input in an HDV format and has not been converted since the input thereof, the function control portion controls the displaying function to display on the screen a time code included in the stream.

8. The recording and reproducing apparatus as defined in claim 5, wherein
when the determining portion determines that the stream is a stream input in an HDV format and has not been converted since the input thereof, the function control portion controls the displaying function to display on the screen information on the date and the time of day on/at which the stream was recorded included in the stream.

9. The recording and reproducing apparatus as defined in claim 5, wherein
when the determining portion determines that the stream is a stream input in an HDV format and has not been converted since the input thereof, the function control portion controls the editing function to prohibit any editing to the stream.

10. The recording and reproducing apparatus as defined in claim 5, wherein
when the determining portion determines that the stream is a stream input in an HDV format and has not been converted since the input thereof, the function control portion controls the editing function to edit the stream correcting the video image supporting data and the audio supporting data such that the video image supporting data and the audio supporting data match the HDV format.

11. The recording and reproducing apparatus as defined in claim 5, wherein
when the determining portion determines that the stream is a stream input in an HDV format and has not been converted since the input thereof, the function control portion controls the reproducing function to reproduce the stream based on reproduction position information of the time code included in the stream.

12. The recording and reproducing apparatus as defined in claim 5, wherein
when the determining portion determines that the stream is a stream input in an HDV format, the function control portion controls the output function to prohibit the stream to be externally output.

13. The recording and reproducing apparatus as defined in claim 5, wherein
the function control portion can determine whether an apparatus that is a destination of output of the stream supports a stream of an HDV format and, when the determining portion determines that the stream is a stream input in an HDV format and has not been converted since the input thereof, the function control portion controls the output function to prohibit the stream to be output to an apparatus other than an apparatus that supports a stream of the HDV format.

14. The recording and reproducing apparatus as defined in claim 5, wherein
when the determining portion determines that the stream is not a stream input in an HDV format, the function control portion controls the output function to correct or create the video image supporting data and the audio supporting data and, thereby, convert and output the stream such that the stream matches the HDV format.

15. The recording and reproducing apparatus as defined in claim 5, wherein
the determining portion can determine whether the stream is a combined stream formed by combining plural types of stream, and wherein
when the determining portion determines that the stream is a combined stream, the function control portion controls the dubbing function to prohibit dubbing of the stream.
